Europäisches Patentamt

European Patent Office

Office européen des brevets

(11) Publication number: 0 605 050 A2

# EUROPEAN PATENT APPLICATION

(21) Application number: 93203649.4

(51) Int. Cl.5: G05B 19/00

(22) Date of filing: 23.12.93

(30) Priority: 28.12.92 US 997979

(43) Date of publication of application:
06.07.94 Bulletin 94/27

(84) Designated Contracting States:
DE FR GB

(71) Applicant: PHILIPS ELECTRONICS N.V.
Groenewoudseweg 1
NL-5621 BA Eindhoven(NL)

(72) Inventor: Featherstone, Roy, c/o Int.
Octrooibureau B.V.
Prof. Holstlaan 6
NL-5656 AA Eindhoven(NL)
Inventor: Cameron, Alexander, c/o Int.
Octrooibureau B.V.
Prof. Holstlaan 6
NL-5656 AA Eindhoven(NL)
Inventor: Whelan, Michael, c/o Int.
Octrooibureau B.V.
Prof. Holstlaan 6
NL-5656 AA Eindhoven(NL)
Inventor: Trovato, Karen, c/o Int.
Octrooibureau B.V.
Prof. Holstlaan 6
NL-5656 AA Eindhoven(NL)
Inventor: Ganapathy, Umamaheswari
c/o Int. Octrooibureau B.V.,
Prof. Holstlaan 6
NL-5656 AA Eindhoven(NL)
Inventor: Guida, Frank
c/o Int. Octrooibureau B.V.,
Prof. Holstlaan 6
NL-5656 AA Eindhoven(NL)

(74) Representative: Schouten, Marcus Maria et al
INTERNATIONAAL OCTROOIBUREAU B.V.,
Prof. Holstlaan 6
NL-5656 AA Eindhoven (NL)

(54) Machine motion controller employing adaptive kinematic model.

(57) A mechanism having at least one output element is positioned by controlled movement of joints of the mechanism in response to joint control signals, representing joint variables, which are generated by a controller based on a kinematic model of the mechanism, which model resides in control software. The control software includes parameters which may be adjusted to account for the effect of variation, over time, of lengths or angles in the mechanism, which occur due to such causes as compliance under load, thermal expansion and wear. Sensors are provided for external observation of the position of one or more parts of the mechanism in response to a set of joint variables, and from a sufficient number of such observations in response to generally different joint control variables, the parameters are automatically adapted by maximal likelihood estimation, considering known standard deviations describing uncertainties in the external observations. Such observations and the adaption of the parameters may be performed during normal operation of the mechanism. Additionally, for the purpose of reducing time and development expense, the control software is generated by compiling a kinematic description file relating frames of reference fixed with respect to bodies of the mechanism.

EP 0 605 050 A2

Rank Xerox (UK) Business Services
(3.10/3.09/3.3.4)

The present invention relates to a controller for precisely manipulating a part of a mechanism by applying command signals indicative of joint control variables to one or more controllable joints, the joint control variables being determined in accordance with a kinematic model of the mechanism. In its particular aspects, the present invention relates to such a controller which may be calibrated utilizing a collection of sensed responses of the mechanism to application of the joint control variables.

In the programmed control of mechanisms requiring precise manipulation of a desired part thereof, for example, numerically controlled manufacturing equipment (NC machines) or robotic devices, the controller operates based upon a model predicting the response of the mechanism to joint control variables. Conventional methods of achieving highly accurate control rely upon an initial calibration operation, and methods to thereafter maintain the mechanism "in calibration." The initial calibration is required to obviate geometric discrepancies between the actual mechanism and its model due, for example, to tolerance limits in its manufacture. Causes for initially calibrated mechanisms to thereafter become uncalibrated include compliance under loading, mechanical wear and thermal expansion. Sufficient mechanical stiffening, though costly, will generally ensure that characteristics of the mechanism are not significantly altered under load. Further, the effects of mechanical wear may be compensated for, or overcome by, periodically interrupting the normal operation of the mechanism for the purpose of manual recalibration and/or replacement of wear prone parts. Lastly, the effects of thermal expansion may be overcome by controlling the physical environment in order to maintain the temperature of the machine within a narrow range.

Conventional techniques for calibration of controllers are not capable of effectively compensating for changes in characteristics of the mechanism which vary rapidly in comparison to intervals between manual calibrations. Further production of a controller for a new mechanism configuration generally requires the investment of significant time and expense to develop control software specific to the configuration.

It is an object of the present invention to provide a controller which operates based upon a parameterized model of the mechanism to be controlled.

It is a further object to provide the controller with a calibration module for automatically adapting the values of the parameters of the model in response to a collection of observations by sensors of the response of the mechanism to inputted joint control variables.

It is yet a further object of the present invention to provide a method for automatically generating parameterized control software for the controller, from a kinematic description of the mechanism and sensors in a standardized syntax expressing relationships between frames of reference.

These and other objects are satisfied by providing a parameterized kinematic model of the mechanism in the form of control software having parameters, such as distances and/or angles between frames of reference fixed with respect to bodies of the mechanism which are treated as subject to adjustment, and a calibration module for determining estimated values of these parameters in response to a collection of sensor observations of the position of at least one part of the mechanism, such as the part it is desired to precisely manipulate. Such parameters may physically represent, for example, variation in the length of a link or an angular offset at a joint.

The sensor observations, which may themselves be subject to uncertainties with known standard deviations, may advantageously be taken during the normal operation of the mechanism. Further, the parameter values used by the control software are preferably automatically and periodically updated with the determined estimated values of the parameters during the course of such normal operation to maintain the mechanism "in calibration". Thus, somewhat rapid changes in the condition or environment of the mechanism, such as variation of ambient temperature, can be compensated for in a manner not heretofore known. Preferably, such estimates are made by a process of maximum likelihood estimation.

In order to significantly reduce the time to develop the control software for a specific mechanism, the control software, including portions of the calibration module specific to the form of the mechanism, are generated automatically from a kinematic description file which is operated on by a compiler that includes a parser to build a data structure describing the interrelationship of frames of reference in the mechanism. The compiler may generate parameterized control software for the controller, as well as a graphics simulation of the location and orientation of the bodies of the mechanism to achieve a succession of set points of position or relative position of operative parts of the mechanism.

Other objects, features and advantages of the present invention will become apparent from the following detailed description when taken in conjunction with the appended drawing, wherein:

Figure 1 is a generalized data flow diagram indicating both the generation of parameterized software and the use of such software by a controller to control a mechanism.

Figure 2 is an exploded view of a simple two link mechanism;

Figure 3A is a schematic diagram of a numerically controlled machine, having five joints; and

Figure 3B is a directed graph relating frames of reference in Figure 3A.

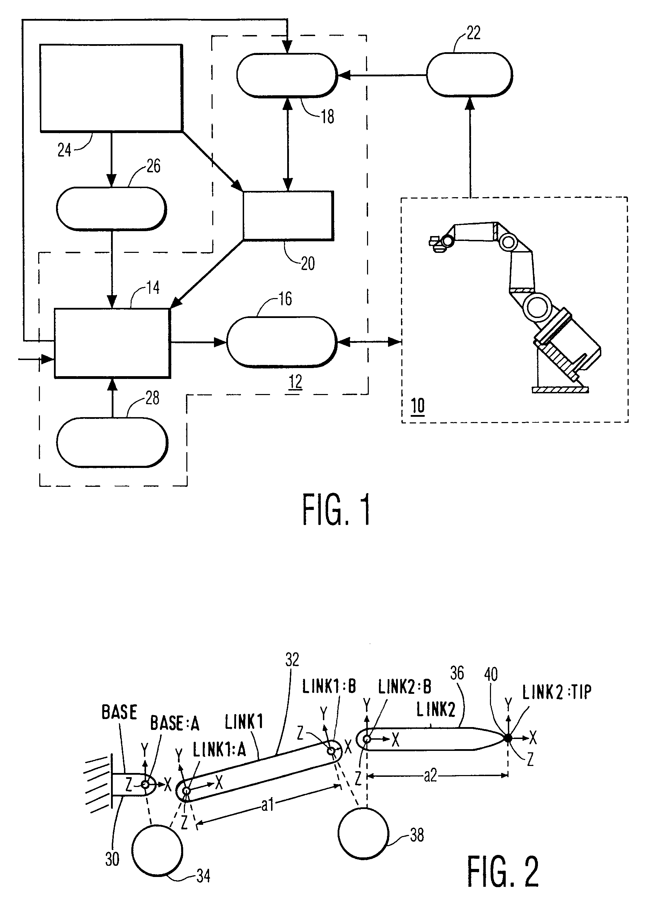

Referring first to Figure 1 of the drawing, there is shown a multi-jointed mechanism 10, such as a robotic arm which is controlled by a mechanism controller 12 that receives a command signal representing a costraint, e.g. a desired position (position is meant to include any or all components of location and/or orientation) of a part of the mechanism. Such part is hereafter referred to as an output element may be any part of the mechanism which it is desired be precisely manipulated, e.g. a tool tip. In response to the desired position represented by the command signal, control software 14 generates a set of joint variables which are passed to joint controllers 16. The joint variables represent the angular displacements to be assumed by revolute joints of the mechanism and the linear displacements to be assumed by prismatic joints of the mechanism. The joints are substantially precisely controlled by joint controllers 16, and generally include their own joint displacement sensors (not shown) which provide feedback to controllers 16 to enable the requisite precision of joint control. In order for control software 14 to generate joint variables, it must be based upon a model of the mechanism, which may be demonstrated by a simulation mode built into the control software for visualizing motions of parts of the dynamics of the mechanism. Because the necessary computations must take into account distances, such as lengths of links, and angles of the mechanism not produced by the joints, it is clear that any uncontrolled variation in such distances and/or angles will cause an error in the position of the output element obtained by precisely displacing the joints in accordance with the computed joint variables. Thus, the positioning results obtained from the combination of mechanism 10 and its controller 12 may fall outside of desired tolerance due to such causes as compliance under loading, thermal expansion and wear.

In the present invention, through a process of automatic calibration by a calibration module 18, values 20 of parameters used by the control software 14 are automatically adapted, periodically, to better conform the model to the mechanism. Each adaption of parameters utilizes a collection of observations by sensors 22, either at an instant or at a plurality of successive instants, of one or more parts of the mechanism. Preferably, such observations include sensing the position of the output element of the mechanism at the plurality of instants. These observations may be subject to a known uncertainty, quantifiable as an individual standard deviation associated with each vector component of location or orientation sensed. The knowledge of these uncertainties allow for determination of estimated values of the parameters by a process of maximal likelihood estimation. The details of such estimation are better considered later, after discussion of kinematic models.

The parameterized control software 14 could be manually coded for a specific mechanism and would inherently be based on a kinematic model of the mechanism. However, in order to reduce development time and expense, one principal of the present invention is that a description 24 is generated in a standardized syntax, which we call "KDL", an acronym for "Kinematics Description Language", and a compiler 26 compiles the model description into code for the control software (preferably in the C programming language). As will become clear as the discussion proceeds, control software 14 contains data structures and/or procedures directly reflecting a parameterized kinematic model of the mechanism. Procedures of general applicability, such as transformations, and inverse kinematics procedures are located in a kinematics library 28 which is linked to control software 14.

The concept of a kinematic model will be better understood with reference to Figure 2 which shows an exploded view of a simple two link mechanism including a plurality of frames of reference, each having x and y axes in the plane of the sheet and a z axis pointing outward from the sheet. There is a base member 30 connected to one end of a first link 32 by a revolute first joint 34 in a manner that the axis of revolution of first joint 34 comprises the coincident z axes of a frame of reference, frame BASE:A having its origin at point BASE:A, which frame is fixed with respect to base member 30 and of a frame of reference, frame LINK1:A, fixed with respect to first link 32 at point LINK1:A. At zero movement of first joint 34, the x axes of frames BASE:A and LINK1:A are aligned with each other, as are their y axes. As a function of the angle $\theta_A$ of rotation of the first joint 34, x,y coordinates of frames LINK1:A and BASE:A: are related by the familiar rotation transformation, in matrix notation:

$$\begin{bmatrix} x_{LINK1:A} \\ y_{LINK1:A} \end{bmatrix} = \begin{bmatrix} \cos\theta_A & \sin\theta_A \\ -\sin\theta_A & \cos\theta_A \end{bmatrix} \cdot \begin{bmatrix} x_{BASE:A} \\ y_{BASE:A} \end{bmatrix}$$

or in a more generalized compact notation:

$$xy_{LINK1:A} = R(\theta_A) \cdot xy_{BASE:A}$$

and, its inverse:

$xy_{BASE:A} = R(-\theta_A) \cdot xy_{LINK1:A}$

At the second end of first link 32 is a second frame of reference LINK1:B which is also fixed with respect to link 32 and related to frame LINK 1:A by a translation along a link length vector "a1" directed between the origins of these two frames. Such relationship is expressed in the following translation transformation, in matrix notation (where, because these two frames have colinear x axes, a1 has only an x component):

$$\begin{bmatrix} x_{LINK1:B} \\ y_{LINK1:B} \end{bmatrix} = \begin{bmatrix} x_{LINK1:A} \\ y_{LINK1:A} \end{bmatrix} - \begin{bmatrix} a1 \\ 0 \end{bmatrix}$$

or in compact notation:

$xy_{LINK1:B} = xy_{LINK1:A} - a1$

and, its inverse:

$xy_{LINK1:A} = xy_{LINK1:B} + a1$

Further, there is a second link 36 which at one end has frame LINK2:B fixed with respect to it and coupled to frame LINK1:B by revolute joint 38 in a manner that the axis of rotation of joint 38 similarly comprises the coincident z axes of frames LINK1:B and LINK2:B. The other end of link 36 has the output element to be positioned, namely a tip 40 at point LINK2:TIP. A frame of reference LINK2:TIP is fixed with respect to link 36 and has its origin at point LINK2:TIP. Similar to the previously noted transformations, coordinates in frame LINK2:B are related to coordinates in frame LINK1:B by the following rotation transformation, which is a function of joint angle $\theta_B$:

$xy_{LINK2:B} = R(\theta_B) \cdot xy_{LINK1:B}$

and coordinates in the frame LINK2:TIP are related to coordinates in the frame LINK2:B by the following translation transformation, which is a function of a vector a2 directed between the origins of these two frames:

$xy_{LINK2:TIP} = xy_{LINK2:B} - a2$

It should thus be apparent that so called "forward kinematics" for e.g. transforming coordinates in frame LINK2:TIP to coordinates in BASE:A, assuming $\theta_A$ and $\theta_B$ are specified, and the parameters a1 and a2 are known, involves a chaining of the inverses of the four above mentioned transformations, as follows:

$xy_{BASE:A} = R(-\theta_A) \cdot [a1 + R(-\theta_B) \cdot [a2 + xy_{LINK2:TIP}]]$

Assuming for the sake of simplicity that we are only interested in the cartesian coordinates x,y of the point LINK2:TIP in frame BASE:A (i.e. $x_{LINK2:TIP} = y_{LINK2:B} = 0$), the following equation is obtained, after trigonometric simplification, which is non-linear with respect to the joint angles $\theta_A$ and $\theta_B$:

$$\begin{bmatrix} x \\ y \end{bmatrix} = \begin{bmatrix} a1\cos\theta_A + a2\cos(\theta_A + \theta_B) \\ a1\sin\theta_A + a2\sin(\theta_A + \theta_B) \end{bmatrix}$$

While it is possible to calculate x and y in frame BASE:A given $\theta_A$ and $\theta_B$ simply by evaluating the right-hand side of this equation, a motion controller must be able to do the reverse; to calculate the joint angles given the coordinates of the tip. This is called the inverse kinematics problem. In the particular example given above, the equation can be inverted analytically to express $\theta_A$ and $\theta_B$ in terms of x and y. However, this is not possible in general. The general case must be solved using numerical methods, such as the well known Newton Raphson method, for finding roots of nonlinear equations. Such methods involve iteratively refining next estimates of joint angles, based on an error vector, in general describing the difference between the desired position of the origin of frame LINK2:TIP and that produced by applying the forward kinematics to last estimates of joint angles. A next estimate of the joint angles is derived by applying the error vector to the pseudo inverse of a matrix of partial derivatives of position components with respect to joint angles, which latter matrix is also provided by the forward kinematics. The latter matrix, in a well known manner, linearizes the forward kinematics about the neighborhood of the position achieved with the last estimates of joint angles.

While, the process of calibration will be discussed later, it should be apparent from inspection of the above equation, which interestingly, is linear in parameters a1, a2, that actual values of these parameters could in principle be solved for from a single precise measurement of the x,y location of point LINK:TIP observed in response to known joint angles $\theta_A$ and $\theta_B$. However, our calibration method allows for weighting a plurality of such measurements, which may be subject to significant statistical variances.

The key to automating development of parameterized control software is that the connectivity of the mechanism can be readily parsed from a kinematic description file. Further, the description file should include nominal values of parameters, functional locations of sensors to be used for calibration, and their accuracy, and preferably line vector drawing for graphic simulation of positions of parts of the mechanism. The following is a kinematic description file for the two link mechanism of Fig. 2:

```
model two__link
parameter nominal a1 = 1, a2 = 1
body base
    reference frame base:ref at idn
    frame base:A at idn
body link1
    frame link1:A at idn
    frame link1:B at xltx(a1)
body link2
    frame link2:B at idn
    frame link2:tip at xltx(a2)
joint A revolute
joint B revolute
connect A from base:A to link1:A
connect B from link1:B to link2:B
locate point__to__point link2:tip wrt base:ref
polyline 1 link1:A, link1:B
polyline 2 link2:B, link2:tip
sensor s1
    coords3 accuracy (.001,.001,.001) at base:ref
sensor s2
    coords3 accuracy (.002,.002,.002) at base:ref
sense data__1 link1:B with s1
sense data__2 link2:tip with s2
```

The syntax of the kinematic description language in the above file is substantially self-evident. After the declaration of nominal values for the parameters, there is a separate description of each body of the mechanism. Each body has its own unique identity location called "idn", at which typically at least one frame is located. The frames fixed with the body are interrelated by parameterized transformations such as xltx(a1), which means translate in the x direction by a1 units. A rotation between frames of reference would have a syntax specifying the axis of rotation (x, y or z) and the angle of rotation (in a direction determined by the right hand rule) which may be a constant or a parameter, such as "roty($\alpha$)". The joints are then declared as to their type, i.e. whether they are revolute or prismatic, the latter being along a straight or curved trajectory. Connect statements connect joints between frames in a manner that for a revolute joint, coincident z axes of the two frames form an axis about which one frame is rotated with respect to the other, and for a prismatic joint, colinear z axes of the two frames form an axis (or tangent to a curved trajectory) along which one frame is translated with respect to the other. Other types of joints are easily modelled, e.g. a screw joint characterized by coupled translation and rotation.

The locate statement indicates that the constraint to be solved by the inverse kinematics is the relative location of link2:tip with respect to base:ref. The polyline statements allow for drawing two lines, representing the two links in a graphical display simulating the positions of the links. Lastly, two sensors are declared located at base:ref (same as base:A), their standard deviation vectors are given in the same units as the parameters, and they are declared to sense the three dimensional coordinates of points link1:B and link2:tip, respectively.

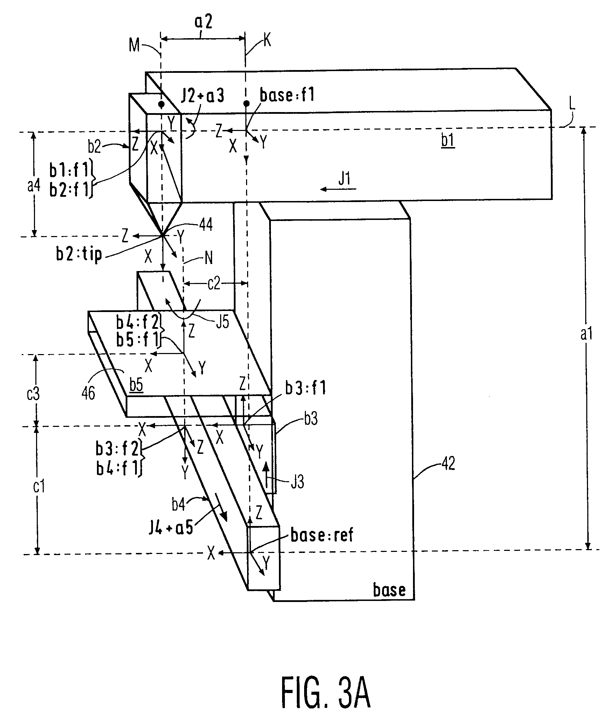

The concept of kinematic modelling, and the benefit of systematizing kinematic description of a mechanism, will become clearer from consideration of the more complicated mechanism shown in Figure 3A, representing an numerical control (NC) machine. Therein, there is a base body 42 which at its top supports a horizontally elongated body b1 via a horizontally directed prismatic joint J1 and at its side supports a body b3 via a prismatic joint J3 directed vertically along axis K. Body b2 is connected to an end of body b1 via a revolute joint J2 for rotation about a longitudinal axis L of body b1 parallel to the axis of translation of joint J1 and includes an output element 44, namely a tool tip displaced radially and downward from axis L along the longitudinal axis M of body b2. Further, horizontally elongated body b4 is connected to body b3 by a horizontally directed prismatic joint J4 whose axis is in a direction perpendicular to the direction of the axis of joint J1. Lastly, there is a body b5, having a top surface 46 for holding a work piece (not shown). Body b5 is connected to body b4 by a revolute joint J5 for rotation about a vertical axis. The prismatic joints J1, J3 and J4 (having mutually perpendicular axes), and the two revolute joints J2 and J5 (having mutually perpendicular axes) provide sufficient degrees of freedom for locating tool tip 44 and orienting the longitudinal axis M of body b2, with respect to surface 46.

In Fig. 3A, frames of reference are chosen in the various bodies to facilitate description in the kinematic description language syntax, with z axes directed along joint axes. Thus, for example, base 42 has a frame base:ref whose z axis is along axis K and a frame base:f1 whose z axis is along axis L. We are interested in the determining the position of frame b2:tip at tool tip 44 with respect to frame b5:f1 which is fixed with respect to work support surface 46.

Parameters a1 through a5 are chosen to enable adaption of the model of the mechanism to uncontrolled variations in distances and to angular variations, such as offsets at a joint. Not all distances and angles are chosen as parameters, subject to variation about nominal values. There are translations through distances c1 through c5, which are treated as constants, and angular rotations of $90°$. No benefit would be gained by also designating c1 through c5 to be adjustable, because the effect of uncontrolled variation is accounted for adequately by adjusting the parameters. It should be appreciated from inspection of Fig. 3A, that the vertical distance between frames b1:f1 and b5:f1 is given by the quantity (a1 - c1 - c3) and a horizontal distance component (in a direction parallel to axis L) by the quantity (a2 - c2). It is not possible to distinguish from external measurements of those relative horizontal and vertical distances, how to uniquely adjust more than one distance parameter in each direction.

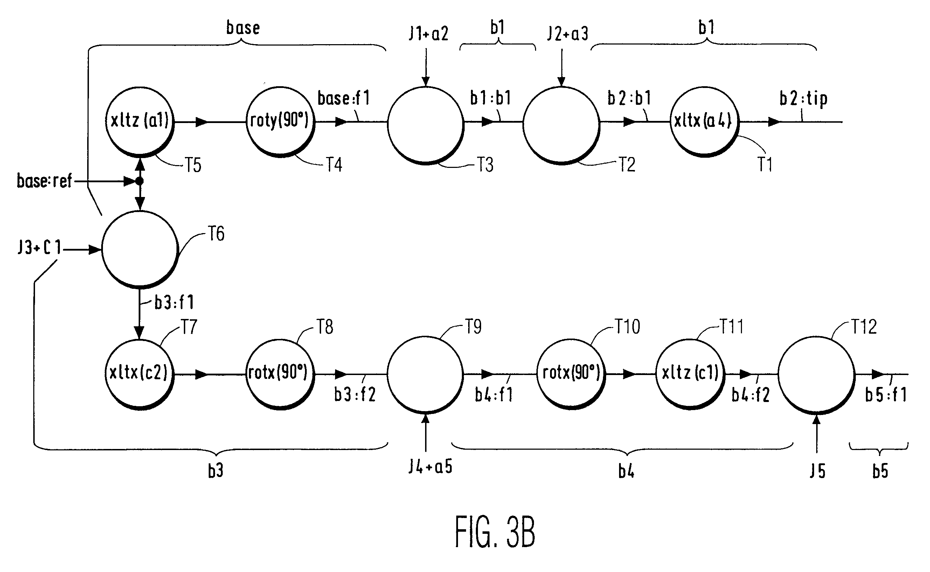

The connectivity of the mechanism of Fig. 3A is best followed from the directed graph of Figure 3B, having nodes in the form of circles representing respective transformations T1 through T12, alternating with directed edges (some of which are unlabelled) representing the dependency of frames of reference identified in Figure 3A. Because the mechanism has one chain of transformations, T5 through T1, relating frame b2:tip to frame base:ref and another chain of transformations, T6 through T12, relating frame b5:f1 to frame base:ref, the edge between transformations T5 and T6 is bidirectional. The graph of Figure 3 closely represents, on a relational level or data dependency level, the data structure sought to be compiled from a kinematic description file. Therein, sections of the graph arising from body descriptions are connected by nodes representing transformations due to joints; these nodes also receive respective joint variables. It should be clear that the position of the tool tip frame b2:tip with respect to body with respect to frame b5:f1 can be computed by traversing the graph through successive applications of the inverses of the transformations T1 through T5, followed by successive application of the transformations T6 through T12. The graph is easily correlated with Figure 3a to show the introduction of length parameters a1, a2, a4 and a5 either as in-block translations or offsets to prismatic joint variables as well as the introduction of angle parameter a3 as an offset to revolute joint variable J2.

It should be apparent that for determining inverse kinematics by the usual iterative numerical methods, the transformations T2, T3, T6, T9 and T12, or their inverses, can be linearized with respect to the joint variables J1 through J5 in the neighborhood of frame orientations produced by a last estimate of the joint variables to facilitate determination of next estimates. In a similar manner, the five parameters a1 through a5 can be adapted using the data from at least one precise external measurement of five features, namely the three linear coordinates specifying the location of the origin of frame b2:tip, and the two angular coordinates specifying the orientation of its z axis, with respect to frame b5:f1 produced by a known set of joint variables, by linearizing transformations T1, T2, T3, T5 and T9 with respect to the parameters. Data from a plurality of such external measurements in response to different sets of joint variables and/or further data from external measurements of the position of other parts of the mechanism, taken at the same or different times, are preferably used both to avoid computational singularities and, when the external measurement data items have statistical uncertainties, to minimize the uncertainties in the determined parameters.

We consider an observable response scalar feature $y_i$ (e.g. a single coordinate) due to an, in general, nonlinear kinematic model $K_i(j_i, a)$ which relates this response feature to both a joint variable vector $j_i$ of joint variable values used to produce this observable response scalar feature and a parameter vector $a$ containing $m$ scalar parameter values. There are a total of $n$ such observations of scalar features, which may be taken at the same instant and/or different instants. We linearize the kinematic model in the neighborhood of an initial parameter vector $a_0$, which for the first determination comprises the nominal parameter values and for later determinations comprises the last determined parameter values. as follows:

$$K_i(j_i, a) \approx K_i(j_i, a_0) + K_i'(j_i, a_0) \cdot \delta a$$

For maximal likelihood estimation we wish to choose a parameter vector increment $\delta a$ which minimizes the quantity:

$$\sum_{i=1}^{n} \left( \frac{y_i - K_i(j_i, a_0) - K_i'(j_i, a_0) \cdot \delta a}{\sigma_i} \right)^2$$

where $\sigma_i$ is the standard deviation associated with the measurement of the response feature. The above quantity may be written in compact notation as the square of a Euclidean distance measure:

$\| A \cdot \delta a - (b-k) \|^2$

where:

$$A = \begin{bmatrix} \dfrac{K_1'(j_1, a_0)_1}{\sigma_1} & \cdots & \dfrac{K_1'(j_1, a_0)_m}{\sigma_1} \\ \vdots & \vdots & \vdots \\ \dfrac{K_n'(j_n, a_0)_1}{\sigma_n} & \cdots & \dfrac{K_n'(j_n, a_0)_m}{\sigma_n} \end{bmatrix}$$

and:

$$b - k = \begin{bmatrix} \dfrac{y_1 - K_1(j_1, a_0)}{\sigma_1} \\ \vdots \\ \dfrac{y_n - K_n(j_n, a_0)}{\sigma_n} \end{bmatrix}$$

where the vector $b - k$ represents the deviation between the measurement data and the prediction of the model for the last parameter estimate, weighted by the uncertainty of each measurement.

The solution of the above equations lies in determining the **m** row by **n** column pseudo inverse **A**$^+$ of the **n** row by **m** column matrix **A**, and therefrom computing:

$\delta$**A** = **A**$^+$ • (b-k)

This is found by singular value decomposition. The initial object is to find matrices **U**, **V** and **W** such that:

**A** = **U** • **W** • **V**$^T$

where **U** is an **n** row by **m** column matrix which is orthogonal in its columns, **V** is an **m** row by **m** column orthogonal matrix and **W** is a **m** row by **m** column diagonal matrix. Then the problem reduces to finding the pseudo inverse **W**$^+$ of diagonal matrix **W** and therefrom computing:

**A**$^+$ = **V** • **W**$^+$ • UT

When **A** is of full rank, all of the diagonal terms in **W** are non-zero. Under such conditions, the pseudo inverse **W**$^+$ is the conventional inverse **W**$^{-1}$, readily obtained by inverting each diagonal term. If any of the diagonal terms of **W** are zero, then zero is inserted as the corresponding diagonal element in **W**$^+$; the non-zero terms are inverted in the usual manner. The known singular value decomposition procedure has the effect if the vector **b - k** is in the range of **A** (i.e. if there are no inconsistencies in the linearly dependent equations) of also minimizing the Euclidian magnitude of $\delta$**a**.

Referring again to Figure 1, it should now be apparent that the values of the parameters of the kinematic model used to control a mechanism may be automatically adapted from the aforedescribed computations performed in the calibration module utilizing a collection of observations of linear and/or angular coordinates of parts of the mechanism 10, such as its output element. While such calibration could be performed at periodic calibration intervals when the mechanism is not operating for its usual purposes, for example in a daily calibration cycle, ideally the values of the parameters are continually automatically adapted during normal operation of the mechanism.

While the present invention has been described in particular detail, it should be appreciated that numerous modifications are possible within the intended spirit and scope of the invention.

**Claims**

1. A controllable machine comprising:

   a mechanism having at least one output element which is positioned by controlled movement of joints of said mechanism, said mechanism having one or more dimensions or angles subject to uncontrolled variation over time, which variation affects accuracy of the positioning;

   a controller for receiving an output element position control signal, representing a desired output element position, and for feeding said joints with joint control signals representing joint variables in accordance with which said joints are commanded to move, said controller comprising means for generating said joint control signals in response to said output element position control signal in accordance with a kinematic model of the mechanism relating said desired output part position to said joint variables and current values of one or more parameters, each representing at least a component of a different one of said dimensions or angles subject to variation;

   sensor means for generating sensor signals representing a collection of observations of components of position of one or more parts of the mechanism, each observation having an associated set of joint variables corresponding to joint control signals fed to said joints; and

   calibration means for using said collection of observations and the associated joint control variables to determine estimated values of said parameters of said kinematic model, and adjusting said current values of the parameters of said model to the estimated values.

2. The machine of Claim 1, wherein each of said observations has an uncertainty indicated by a predetermined associated standard deviation.

3. The machine of Claim 1 or 2, wherein the calibration means are arranged for determining said estimated values of said parameters by maximal likelihood estimation.

8

4. The machine of Claim 1, 2 or 3, wherein at least one of said observations is of at least one component of position of said at least one output element.

5. A method for controlling a mechanism having a plurality of controllably moveable joints for positioning at least one output element in response to an output element position control signal, which mechanism has one or more dimensions or angles subject to uncontrolled variation over time, said variation affecting accuracy of said positioning, said method comprising:

receiving output element position control signals, representing successive output element position variables;

generating joint control signals representing successive sets of joint variables indicative of amounts which said joints are to be successively commanded to move, said generating being in accordance with a kinematic model of the mechanism relating said output part position variables to said sets of joint variables and current values of one or more parameters, each parameter representing at least a component of a different one of said dimensions or angles subject to variation;

feeding said joints with the generated joint control signals;

generating at least one sensor signal representing one or more components of an observed position of at least one part of the mechanism at a plurality of instants, the joint control signals fed to said joints at said plurality of instants representing a respective plurality of sets of joint variables; and

in response to the observed one or more components of position at said plurality of instants, and the plurality of sets of joint control variables, determining estimated values of said parameters of said kinematic model; and

adjusting said parameters of said model to the estimated values.

6. A method for controlling a mechanism having a plurality of controllably moveable joints coupling bodies of the mechanism, for positioning at least one output element in response to an output element position signal representing output element position variables, by applying joint control signals to said joints, said joint control signals commanding movement of said joints in accordance with a set of joint variables represented by said respective joint control signals, said method comprising:

generating a machine readable kinematic description file for said mechanism in a kinematic description language, said file description representing transform and joint coupling relationships between a plurality of frames of reference fixed with respective associated bodies of the mechanism, including a frame of reference fixed and associated with said at least one output element, said relationships including parameters;

compiling said kinematic description file into a set of control instructions for determining said joint control variables from said output element position variables and current values of said parameters;

receiving output element position control signals, representing output element position variables;

generating joint control signals in response to said output part position control signals utilizing said set of control instructions; and

applying the generated joint control signals to the joints of said mechanism with the generated joint control signals.

7. A method as claimed in Claim 6, further comprising

generating at least one sensor signal representing a collection of observations of one or more components of position of at least one part of the mechanism produced in response to joint control signals applied to said joints; and

in response to said collection of observations and the joint variables represented by the joint control signals applied for sais observations, determining estimated values of said parameters of said kinematic model; and

adjusting the current values of said parameters of said model to the estimated values.

8. The method of Claim 5, 6 or 7, wherein said sensor signal represents an observed position of said at least one part of said mechanism with an uncertainty indicated by a predetermined standard deviation.

9. The method of Claim 5, 6, 7 or 8, wherein said estimated values of said parameters are determined by maximal likelihood estimation.

10. The method of Claim 5, 6, 7, 8 or 9, wherein said at least one sensor signal represents an observed position of said at least one output element.

FIG. 1

FIG. 2

FIG. 3A

FIG. 3B

EP 0 605 050 A2